# FASCICULE DE BREVET EUROPEEN

(11) **EP 0 777 825 B1**
(45) Date de publication et mention de la délivrance du brevet: **21.10.1998**
(21) Numéro de dépôt: 95929814.2
(22) Date de dépôt: 08.08.1995
(51) Int. Cl.: F04B 17/03, F04D 13/06, H02M 5/14

(54) **GROUPE DE POMPAGE A MOTEUR TRIPHASE TRES BASSE TENSION**
PUMPENAGGREGAT MIT DREIPHASENMOTOR MIT SEHR NIEDRIGER SPANNUNG
PUMPING UNIT WITH VERY LOW VOLTAGE THREE-PHASE MOTOR

(30) Priorité: 24.08.1994 FR 9410244
(43) Date de publication de la demande: 11.06.1997
(73) Titulaire: KSB S.A., 92635 Gennevilliers Cédex (FR)
(72) Inventeur: BERTHON, Jacques, F-36250 Saint-Maur (FR); FRAGNET, Jean-François, F-36000 Chateauroux (FR)
(74) Mandataire: Eidelsberg, Victor Albert
(86) Numéro de dépôt international: EP9503141
(87) Numéro de publication internationale: WO9606284

(56) Documents cités:
- EP-A- 0 585 538
- BE-A- 1 003 110
- DE-A- 2 321 425
- GB-A- 1 434 226
- US-A- 4 213 745

## Description

L'invention se rapporte aux groupes de pompage comprenant une pompe à moteur triphasé et un circuit d'alimentation électrique du moteur à partir d'une source de courant électrique monophasée basse tension, c'est-à-dire notamment comprise entre 110 volt et 600 volt et d'une fréquence donnée, notamment celle du réseau de 50 hertz ou de 60 hertz.

Jusqu'ici, le circuit d'alimentation électrique interposé entre la source et le moteur est constitué d'un transformateur de Scott ou d'un transformateur de Leblanc.

Cette solution n'est pas transposable à l'alimentation d'un moteur par une source de courant à très basse tension de sécurité, notamment inférieure à 24 volt, parce qu'alors, la section des conducteurs des bobinages du moteur atteint des valeurs démesurées dépassant 10 mm². Pour ces valeurs, le moteur doit avoir une taille très grande et le coefficient de foisonnement devient mauvais, de sorte que le volume du moteur augmente plus que proportionnellement à sa puissance.

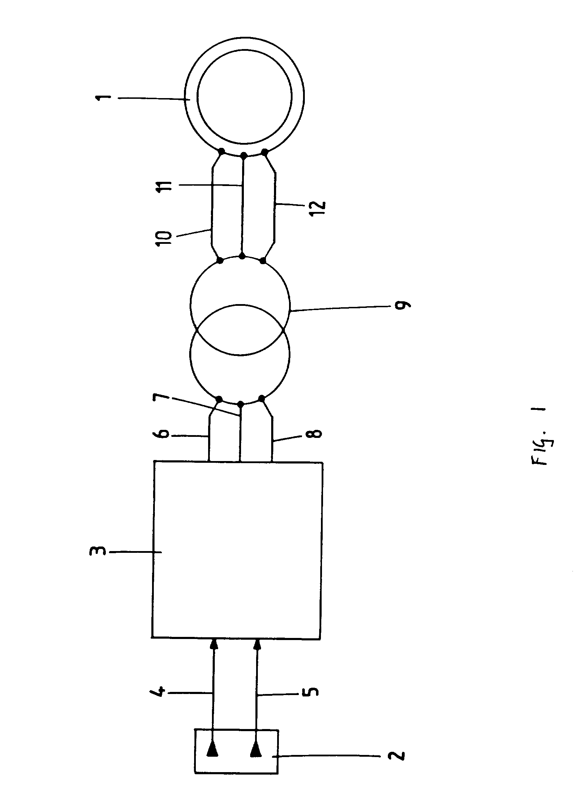

Le document GB-A-1 434 226 (Roberts) décrit une pompe destinée à pomper des liquides et ayant un moteur électrique polyphasé, de préférence triphasé, et un circuit d'alimentation électrique à partir d'une source de courant électrique alternatif, par exemple de 250 volt et 50 hertz. Le moteur y est certes conçu pour ètre alimenté à basse tension, inférieure à 25 volt et par exemple égale à 10 volt, mais le circuit d'alimentation comprend un circuit convertisseur et redresseur 38 (figure 4), qui convertit le courant électrique alternatif de la source en courant continu basse tension, et un circuit 40 onduleur, qui convertit ce courant continu basse tension en courant alternatif polyphasé basse tension de fréquence supérieure à 50 hertz pour le moteur électrique 41.

Les normes de sécurité concernant l'emploi des pompes dans des bassins et piscines tendent à imposer l'utilisation d'une alimentation très basse tension de sécurité d'une valeur comprise entre 12 volt et 24 volt. Le réseau de distribution électrique des pavillons et appartements est normalement de 230 volt. Il serait donc très souhaitable d'avoir la possibilité d'alimenter une pompe à moteur triphasé fonctionnant sous une très basse tension de sécurité à partir du réseau, sans pour autant se heurter à des impossibilités pratiques de fabrication du moteur.

L'invention y pourvoit.

Le groupe de pompage suivant l'invention comprend une pompe à moteur triphasé et un circuit d'alimentation électrique du moteur à partir d'une source de courant électrique monophasée basse tension, notamment supérieure à 110 volt et d'une fréquence donnée, caractérisé en ce que
- le moteur est conçu pour être alimenté en très basse tension de sécurité, notamment inférieure à 24 volt,
- le circuit d'alimentation comprend, successivement de la source au moteur, un convertisseur de fréquence destiné à faire passer le courant électrique de l'état monophasé à l'état triphasé, tout en en augmentant la fréquence, et un transformateur triphasé destiné à abaisser la tension du courant à une très basse tension de sécurité.

En transformant le courant issu de la source dans le convertisseur de fréquence en un courant triphasé de plus grande fréquence, on obtient non seulement la transformation nécessaire du courant à l'état triphasé, mais aussi, par la fréquence plus grande ainsi obtenue, la possibilité de diminuer les dimensions du transformateur abaisseur de tension en aval et également, les dimensions du moteur destiné à fonctionner sous une très basse tension de sécurité.

Le convertisseur de fréquence peut être notamment tel qu'il double ou triple la fréquence.

La figure unique du dessin annexé illustre l'invention.

Le circuit d'alimentation d'un moteur 1 triphasé et destiné à être alimenté à une tension de 12 volt par le réseau 2 fournissant un courant électrique monophasé de 230 volt et de 50 hertz, comporte, successivement de la source 2 au moteur 1, un convertisseur 3 de fréquence, qui est relié à la source 2 par deux fils 4 et 5, dans lequel le courant électrique passe de l'état monophasé à l'état triphasé et sa fréquence est doublée et duquel partent trois fils 6, 7, 8 aboutissant à un transformateur 9 triphasé classique dans laquelle la tension est abaissée de 230 volt à 12 volt. Le transformateur 9 est relié au moteur 1 par trois fils 10, 11, 12 correspondants, tout comme les fils 6, 7, 8, aux trois phases.

## Revendications

1. Groupe de pompage comprenant une pompe à moteur (1) triphasé et un circuit d'alimentation électrique du moteur à partir d'une source de courant électrique (2), caractérisé en ce que
- le moteur (1) est conçu pour être alimenté à très basse tension de sécurité, notamment inférieure à 24 volt,
- le circuit d'alimentation comprend, successivement de la source (2) au moteur (1), un convertisseur de fréquence (5) destiné à faire passer le courant électrique de l'état monophasé à l'état triphasé, tout en en augmentant la fréquence, et un transformateur (9) triphasé destiné à abaisser la tension du courant à une très basse tension de sécurité.

2. Groupe suivant la revendication 1, caractérisé en ce que le convertisseur (3) double ou triple la fréquence.

## Patentansprüche

1. Pumpenaggregat, bestehend aus einer Pumpe mit Dreiphasenmotor (1) und einem elektrischen Speisestromkreis vom Motor bis zu einer elektrischen Stromquelle (2), dadurch
**gekennzeichnet**, daß
- der Motor (1) für die Speisung mit einer sehr niedrigen Sicherheitsspannung konstruiert ist, vorzugsweise unterhalb von 24 Volt,
- der Speisestromkreis - von der Quelle (2) bis zum Motor (1) aufeinanderfolgend - einen Frequenzwandler (5) aufweist, der dazu bestimmt ist, den elektrischen Strom vom einphasigen in den dreiphasigen Zustand zu überführen und dabei die Frequenz zu erhöhen, und einen Dreiphasentransformator (9), der bestimmt ist, die Spannung des Stroms auf eine sehr niedrige Sicherheitsspannung abzusenken.

2. Aggregat nach Anspruch 1, dadurch
**gekennzeichnet**, daß der Wandler (3) die Frequenz verdoppelt oder vervielfacht.

## Claims

1. Pumping unit comprising a pump with a three-phase motor (1) and a circuit for supplying the motor electrically from a source (2) of electric current, characterised in that
- the motor (1) is designed to be supplied at a very low safety voltage, particularly one lower than 24 volts,
- the supply circuit comprises, in succession from the source (2) to the motor (1), a frequency-converter (3) intended to cause the electric current to pass from the single-phase to the three-phase state, while at the same time increasing its frequency, and a three-phase transformer (9) intended to lower the voltage of the current to a very low safety voltage.

2. Unit according to claim 1, characterised in that the converter (3) doubles or triples the frequency.
